# EUROPÄISCHE PATENTANMELDUNG

(11) **EP 0 816 155 A2**
(43) Veröffentlichungstag der Anmeldung: **07.01.1998**
(21) Anmeldenummer: 97106126.2
(22) Anmeldetag: 15.04.1997
(51) Int. Cl.: B60K 37/06, G06F 3/033

(54) **Verfahren und Eingabeeinheit für ein Bediensystem für Fahrzeug-Bildschirmsysteme**

(30) Priorität: 29.06.1996 DE 19626249
(71) Anmelder: Preh-Werke GmbH & Co. KG, 97616 Bad Neustadt (DE)
(72) Erfinder: Brüggemann, Ulrich, 97618 Heustreu (DE)
(74) Vertreter: Pfeiffer, Helmut, Dipl.-Ing.

(57) **Zusammenfassung**

Die Erfindung betrifft ein Verfahren und eine Eingabeeinheit (1) zur Bedienung von Bildschirmsystemen in Fahrzeugen.

Dabei wird eine grafische Benutzeroberfläche für einen Bildschirm (3) verwendet. Mit Hilfe einer Eingabeeinheit (1), die über ein daran befindliches Betätigungselement (11) und einen Rechner (2) bidirektional mit einem Cursor (5) des Bildschirmes (3) verbunden ist, wird der Cursor (5) zu Betätigungssymbolen (6, 6.1) mit ihren Funktionen (4) und Unterfunktionen (4.1) bewegt. Durch Betätigen einer Bedientaste (111) am Betätigungselement (11) werden die Bedienfunktionen (4) und Unterfunktionen (4.1) aus den Menues ausgewählt. Eine bidirektionale und für den Benutzer spürbare taktile Rückmeldung zwischen dem Rechner (2) und dem Betätigungselement (11) ermöglicht einen solchen Aufbau des neuen Bediensystems (10).

## Beschreibung

Die Erfindung betrifft ein Verfahren und eine Eingabeeinheit für ein Bediensystem für Bildschirmsysteme in Fahrzeugen.

Bekannt sind Bediensysteme für Bordmonitore, die zumeist Bedientasten oder Inkrementengeber besitzen, welche dem Bildschirmrand zugeordnet sind.

Einen solchen Bordmonitor mit Funktionsanzeige beschreibt die DE-PS 36 28 333. Die Funktionsanzeige besitzt eine räumliche Zuordnung von Auswahlschaltern bzw. Funktionsschaltern am Bordmonitor, wobei durch die Schalter die jeweils gewünschte Funktionsauswahl erfolgt. Nachteilig ist, daß durch diese Art nur eine Direktzuordnung von Anzeigen und Betätigungen möglich ist. Außerdem muß der Fahrer sich beim Betätigen des Systems zu lange auf den Bordmonitor konzentrieren, um die Funktionen zu beobachten.

Die Aufgabe der Erfindung besteht darin, ein Bediensystem zu schaffen, das eine benutzerfreundliche Bedienoberfläche verwendet und auch das Ablenken des Benutzers vom Verkehrsgeschehen auf ein unumgängliches Minimum reduziert. Eine weitere Aufgabe besteht darin, eine Eingabeeinheit zur Durchführung und Unterstützung dieses Verfahrens aufzuzeigen.

Gelöst wird die Aufgabe durch die im Patentanspruch 1 und Patentanspruch 17 enthaltenen Merkmale.

Durch die Verwendung einer erfindungsgemäßen, räumlich von einem Bildschirm getrennten und beispielsweise auf einer Mittelkonsole im Fahrzeug angeordneten mausartigen Eingabeeinheit ist eine Benutzeroberfläche ähnlich der eines PC's, wie z.B. von Windows, nutzbar.
Die Benutzung des Bildschirmsystems und die internen Abläufe des Rechners erfolgen dann ähnlich wie bei herkömmlichen Rechnersystemen. Die mausartige Eingabeeinheit steuert über ein Betätigungselement an der Eingabeeinheit ein Bildschirmsymbol/Betätigungssymbol über einen Cursor an. Eine am Betätigungselement angeordnete Bedientaste wird wie eine herkömmliche Computermaus angeklickt, wenn das Bildschirmsymbol unter dem Cursor liegt. Dadurch wird ein Untermenue/Unterprogramm, das sich hinter dem Bildschirmsymbol befindet, aufgerufen. Der Cursor wird durch die Verschiebung des Betätigungselementes zu einem neuen Bildschirmsymbol bewegt und ruft durch ein erneutes Klicken der Bedientaste ein weiteres Untermenue auf Befindet sich hinter dem Bildschirmsymbol kein Programm sondern eine Stell- oder Schaltfunktion, wird bei gedrückter Bedientaste und Verschiebung des Betätigungselementes in X- und/oder Y- Richtung diese Funktion ausgeführt. Welche Richtung blockiert oder frei beweglich bleibt, wird durch das im Rechner hinterlegte Programm bestimmt. Wie bei herkömmlichen Computermäusen kann durch 2 maliges Klicken der Bedientaste das Hauptmenue wieder aufgerufen werden. Dies ist aber auch programmtechnisch lösbar.
Unter 'Klicken' wird hier ein kurzzeitiger Schaltvorgang durch Betätigen der Bedientaste verstanden. Dagegen soll 'Drücken' der Bedientaste zum Ausdruck bringen, daß diese über eine gewisse, für eine Funktion/Operation benötigte Zeit, in der geschalteten Position verbleibt.
Die Eingabeeinheit ist so gestaltet, daß das Betätigungselement auf einer gegebenen Fläche in X- und Y-Richtung frei beweglich ist, wobei eine bidirektional wirkende Zuordnung zwischen der Position des Betätigungselementes und der Position des Cursors auf der Benutzeroberfläche des Bildschirms besteht.

Vorteilhafte Ausgestaltungen sind in den Unteransprüchen aufgezeigt.

Bei Führung des Betätigungselementes an eine Bedienposition und damit des Cursors auf das Betätigungssymbol wird durch eine Rückmeldung zwischen Rechner und der Eingabeeinheit die freie Beweglichkeit des Betätigungselementes in X- und/oder Y-Richtung blockiert. An dieser so festgelegten Bedienposition wird dann abhängig von einem Programm ein Unterprogramm aufgerufen, so daß eine neue Bedienposition angezeigt wird, die als letzten Programmpunkt eine Stell- oder Schaltfunktion auslöst. Das Erreichen einer jeweiligen Bedienfunktion/-position mit oder ohne Stell- oder Schaltfunktion wird dem Bediener ähnlich der Betätigung eines konventionellen Schalters oder Tasters taktil (spürbar) rückgemeldet. Durch diese Abläufe wird gewährleistet, daß nicht ständig der Bildschirm beobachtet werden muß um zu prüfen, ob sich der Cursor in einer Bedienposition befindet oder ob sich der Cursor in eine gewollte Richtung bewegen läßt.

Erfolgt die taktile Rückmeldung und Einstellung der X- oder Y- Position mittels einer elektromotorischen Halte- bzw. Stelleinrichtung, beispielsweise mit Elektromotoren, so erhöht sich die Bedienbarkeit des Systems. Das Betätigungselement kann durch den/die Elektromotore aktiv in eine Bedienposition gebracht werden, die einer aufdem Bildschirm angezeigten Funktionsposition entspricht. Hierzu berechnet ein Rechner ausgehend von einer Ist-Position vorzugsweise den kürzesten Abstand einer Soll-Position des Betätigungselementes unter Berücksichtigung der Ist- und Soll-Positionen des Cursors zu der Bedienposition und verstellt über den/die Elektromotore die Position des Betätigungselementes. Die Ist- und Soll- Positionen des Cursors auf dem Bildschirm werden durch den Rechner durch interne Speicherberechnungen ermittelt und im Programm abgelegt. Der/die Elektromotore können das Betätigungselement in einer Bedienposition halten und für den Benutzer eine am Betätigungselement spürbare, federnd wirkende Gegenkraft erzeugen, die vom Benutzer in der gewollten Betätigungsrichtung/Verschieberichtung zu überwinden ist. Auch können durch zusätzliche Sensoren bzw. Schalter am Betätigungselement nur für den Fahrer und Beifahrer relevante Bedienfunktionen über spezielle Programme verwendet werden.

Anhand einer Zeichnung werden die Ausführungsbeispiele näher erläutert.

Es zeigen:
Fig.1
   ein Blockschaltbild eines Bediensystems
Fig.2
   eine Prinzipdarstellung eines Ablaufsystems
Fig.3
   eine Prinzipdarstellung eines Betätigungselements.

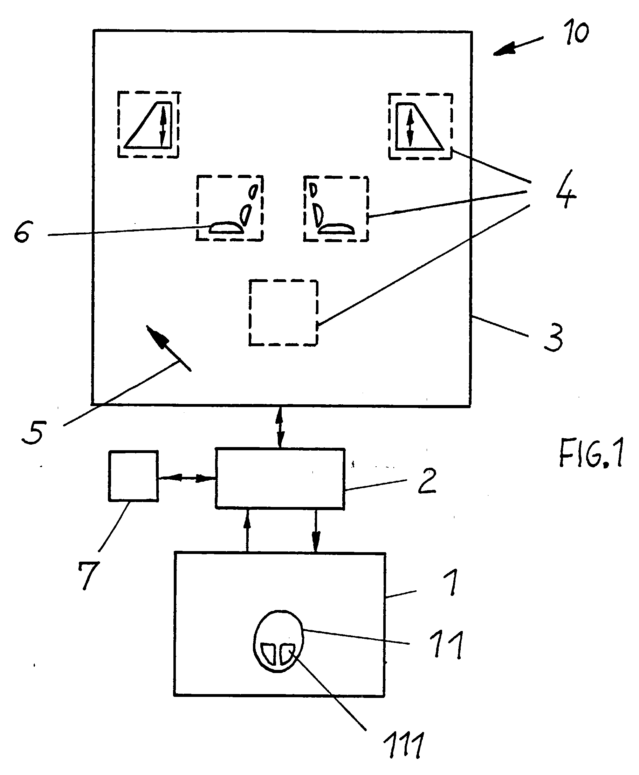

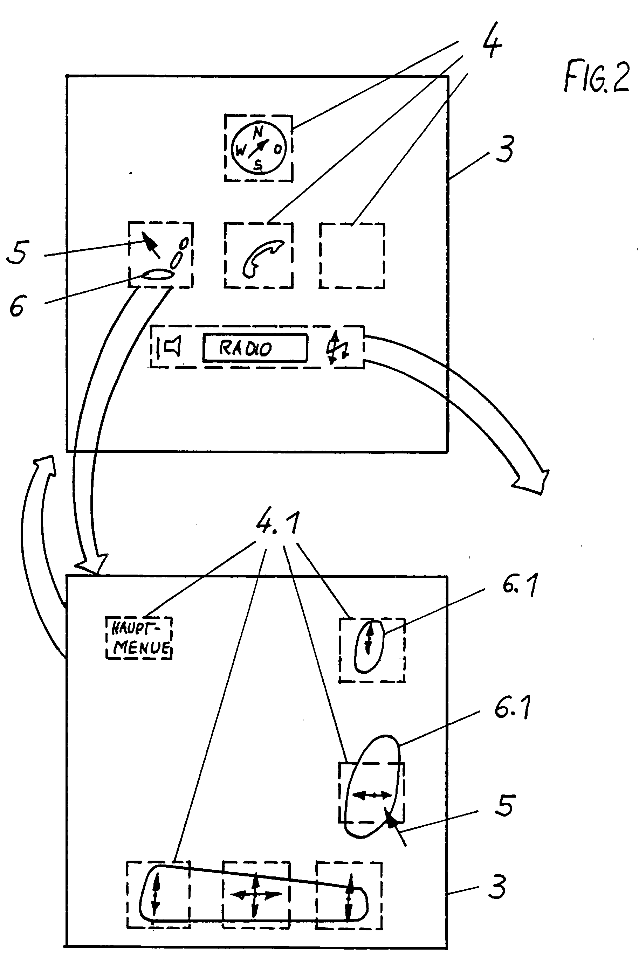

In Figur 1 dargestellt ist eine Eingabeeinheit 1, die über einen Rechner 2 an einen Bildschirm 3 in herkömmlicher Art und Weise elektrisch angeschlossen ist. Die Bedienfunktionen, wie beispielsweise Sitzpositionsverstellung, automatische Fensterscheibenbetätigung, sind mit 4 gekennzeichnet. Die Eingabeeinheit 1, der Rechner 2 und der Bildschirm 3 stellen ein Bediensystem 10 z.B. für ein Fahrzeug dar. Über einen Cursor 5, geführt von der Eingabeeinheit 1 mittels Betätigungselement 11 und dem Rechner 2 wird das Bediensystem 10 für die Ansteuerung der einzelnen Funktionen 4 im Kraftfahrzeug gesteuert. Dabei weist der Cursor 5 auf ein Betätigungssymbol 6 in einem sogenannten Hauptmenue. Die Hauptfunktionen 4 besitzen mehrere Unterfunktionen 4.1 die wiederum vorzugsweise hinter Betätigungssymbolen 6.1 liegen (Fig. 2). Als Information 8 des Bildschirmes 3 sind die Funktionen 4, 4.1 sowie der Cursor 5 zusammengefaßt. Der Übersichtlichkeit halber ist die Information 8 nicht extra in den Figuren dargestellt.

Die Umsetzung, daß heißt die Realisierung der ausgewählten Funktion 4 bzw. der letzten Unterfunktion 4.1 erfolgt in bekannter Art und Weise über separate Motore und Einrichtungen, d. h. Aktoren 7, die über den selben Rechner 2 gesteuert werden können. Dabei werden Stell- oder Schaltvorgänge an den Aktoren 7 im Fahrzeug ausgelöst, wie beispielsweise das Verstellen einer Lehne, Lösen einer Handbremse oder Schalten eines Radios.

Das Verfahren läuft wie folgt ab:

Das Betätigungselement 11 der Eingabeeinheit 1 wird in X- und Y- Richtung auf einer gegebenen und dadurch begrenzten Fläche frei beweglich geführt. Der Bewegungsrichtung/Verschiebungsrichtung folgt die Position des Cursors 5 auf dem Bildschirm 3, wobei die Position des Betätigungselementes 11 auf der vorgegebenen Fläche in der Eingabeeinheit 1 der Position des Cursors 5 aufdem Bildschirm 3 entspricht. Dabei sind der Rechner 2 und das Betätigungselement 11 der Eingabeeinheit 1 derart verschaltet, so daß eine absolute Zuordnung der Position des Betätigungselementes 11 für die Positionierung des Cursors 5 durch den Rechner 2 erfolgt. Das kann in bekannter Art und Weise im Rechner 2 mit Hilfe eines Referenzmusters sowie einer internen Speicherberechnung für die Koordinaten des Cursors 5 geschehen. Im Referenzmuster sind diese Koordinaten der Position des Cursors 5 und zusätzlich der Position des Betätigungselements 11 abgelegt. Erfolgt eine Verschiebung des Betätigungselementes 11 in X- und/oder Y-Richtung auf der begrenzten Fläche, wird der Cursor 5 durch das Referenzsignal dieser neu eingestellten Koordinaten in die dazugehörige Position auf dem Bildschirm 3 bewegt (ähnlich einem Zeichengriffel bei bekannten CAD-Systemen). Bedingt durch die vorgegebene Fläche die dem Betätigungselement 11 zur Verfügung steht, sind die Referenzsignale vorzugsweise so angelegt, daß beispielsweise 1 mm Verstellung des Betätigungselementes 11 in X-Richtung einer Verstellung von 2 mm des Cursors 5 in X-Richtung auf dem Bildschirm 3 entspricht. Gleiches gilt für das Referenzsignal der Y-Richtung.

Wird durch den Cursor 5 mit Hilfe des Betätigungselementes 11 der Eingabeeinheit 1 in X- und/oder Y-Richtung eine Position auf dem Bildschirm 3 ausgewählt, auf welchem sich ein Betätigungssymbol 6 befindet, kann durch Klicken einer Bedientaste 111 des Betätigungselementes 11 die Funktion 4, die hinter dem Betätigungssymbol 6 liegt, aus dem Hauptmenue ausgewählt werden. In dem so aufgerufenen Untermenue können durch eine weitere Bewegung des Betätigungselementes 11 der Eingabeeinheit 1 in X- und/oder Y-Richtung nun die zu dieser Funktion 4 gehörende Unterfunktionen 4.1 im Untermenue ausgewählt werden. Wird beispielsweise, wie in Figur 2 angegeben, zur Verstellung der 'Rückenlehne des Fahrersitzes' als Funktion 4 der Sitz aus dem Hauptmenü ausgewählt und springt in das aufgerufene Untermenue, so kann durch Anfahren des Cursors 5 auf das Betätigungssymbol 6.1 die 'Lehne' als Unterfunktion 4.1 gewählt werden. Das Vor- und Zurückstellen der 'Lehne' erfolgt dann durch Verschiebung des Betätigungselementes 11 bei gedrückter Bedientaste 111 in X-Richtung, z. B. nach links zum Fahrzeugführer. Hierbei bleibt beispielsweise eine Verschiebungsrichtung, vorzugsweise die Y-Richtung gesperrt. Zur Sperrung einer Verschiebungsrichtung und damit einer Bewegungsrichtung wirkt ein im Rechner 2 hinterlegtes Programm auf eine elektromotorische Halte- bzw. Stelleinrichtung 12 in der Eingabeeinheit 1 derart ein, daß die freie Beweglichkeit des Betätigungselementes 11 gesperrt und lediglich die X- oder Y- Richtung frei beweglich ist (wird später weiter ausgeführt). Das Betätigungselement 11 wird bei gedrückter Bedientaste 111 gegen eine vom Rechner 2 gleichfalls durch das Programm in der freien Richtung erzeugten und gesteuerten Gegenkraft gedrückt, bis die Position der Lehne mit einer gewünschten Lehnenposition übereinstimmt. Nach Drucklösung der Bedientaste 111 des Betätigungselementes 11, d. h. bei ungedrückter Bedientaste 111, wird die bis dahin gesperrte Y-Richtung wieder freigeschaltet. Das Betätigungselement 11 besitzt bei gelöster, d.h. ungedrückter Bedientaste 111 keine Betätigungsfunktion, d. h. sie schaltet keine Abläufe/Funktionen 4. Die Bedientaste 11 wird nun zum nächsten Betätigungssymbol 6.1 des Untermenues, beispielsweise 'Verstellen der Kopfstützen' geführt. Die Bedientaste 111 des Betätigungselementes 11 wird erneut gedrückt, wodurch beispielsweise die X-Richtung gesperrt und nur die Y-Richtung freigegeben wird und das Betätigungselement 11 eine Betätigungsfunktion besitzt. Das Betätigungselement 11 wird zur Höhenverstellung der Kopfstütze beispielsweise vor- oder zurückgeführt, je nachdem, ob die Kopfstütze höher oder tiefer eingestellt werden soll. Das Vor- oder Zurückführen des Betätigungselementes 11 erfolgt wie bei der Lehnenverstellung in einem kleinen Verschiebungsbereich. Auch hier wird gegen die vom Rechner 2 gesteuerten Gegenkräfte gedrückt, die in diesem Fall im vorderen und hinteren Verschiebungsbereich wirken. Es werden dann so lange die Aktoren 7 zur Kopfstützenverstellung angesteuert, wie das Betätigungselement 11 gegen eine der Gegenkräfte gedrückt wird.
Danach ist im Untermenue die Bedienposition 'Sitzmittenverstellung' aufrufbar. Dazu wird das ungedrückte Betätigungselement 11 in die Position geführt, wo der Cursor 5 auf das Betätigungssymbol 6.1 'Sitzmitte' weist. Nach dem Anklicken dieses Betätigungssymboles 6.1 mittels Bedientaste 111 und Cursor 5, ist bei danach gedrückter Bedientaste 111 das Betätigungselement 11 durch den Rechner 2 in X- und Y- Richtung freibeweglich geschaltet. Dabei kann bei Verschiebung des Betätigungselementes 11 in X- Richtung der Sitz vor- und/oder zurückgestellt werden, während eine Verschiebung des Betätigungselementes 11 in Y-Richtung den Sitzmittenbereich höher und/oder tiefer einstellt.
Welche Verschiebungsrichtung des Betätigungselementes 11 freigeschaltet oder blockiert wird, hängt von dem dazugehörigen Programm ab.

Sind die Menues abgefahren, d. h. durchlaufen worden, erfolgt die Einstellung des ursprünglichen Hauptmenues durch beispielsweise 2-maliges Betätigen/Klicken der Bedientaste 111 des Betätigungselementes 11. Dies kann aber auch nach einer Rückführung in eine vom Programm definierte Ausgangsposition beispielsweise X = 0 und Y = 0 automatisch gleichfalls über das Programm im Rechner 2 und die elektromotorische Halte- bzw. Stelleinrichtung 12 der Eingabeeinheit 1 geschehen, was später noch ausgeführt wird. Der Ablauf für die weiteren Funktionen 4 über die weiteren Betätigungssymbole 6 ist äquivalent.

So kann auch das Lösen oder Ziehen der 'Handbremse' als Funktion 4 und Unterfunktion 4.1 erfolgen. Dabei liegt hinter dem Betätigungssymbol 6 als Funktion 4 die 'Handbremse'. Soll diese 'Handbremse' gelöst werden, so wird mittels Betätigungselement 11 der Cursor 5 auf dieses Betätigungssymbol 6 eingestellt. Durch Drücken der Bedientaste 111 wird diese Funktion 4 aufgerufen und stellt die dazugehörende Unterfunktion 4.1 im zugehörigen Untermenue ein. Dabei wird durch das Programm im Rechner 2 beispielsweise die X-Richtung blockiert, d. h. gesperrt. Das 'Lösen der Handbremse' als Unterfunktion 4.1 erfolgt bei gedrückter Bedientaste 111, wobei das Betätigungselement 11 vorzugsweise nach vorn in Y-Richtung geführt wird. Danach wird manuell oder automatisch, wie bereits beschrieben, das Hauptmenue wieder eingestellt. Wird hingegen die Handbremse gezogen, wird nach Aufrufen der Unterfunktion 4.1 und der Sperrung der X-Richtung bei gedrückter Bedientaste 111 das Betätigungselement 11 in Y-Richtung zurückgeführt. Auch danach kann eine manuelle oder automatische Einstellung des Hauptmenues erfolgen.

Das Betätigungselement 11 kann aber auch durch die elektromotorische Halte- bzw. Stelleinrichtung 12 der Eingabeeinheit 1 aktiv in die Betätigungsposition der Funktion 4, beispielsweise 'Handbremse', wie auch Unterfunktion 4.1 'Ziehen' gebracht werden. Hierzu berechnet der Rechner 2 nach einem Programm den kürzesten Weg des Betätigungselements 11 durch Soll-Ist-Vergleich und Referenzmuster. Danach verstellt die Halte- bzw. Stelleinrichtung 12 das Betätigungselement 11 derart, daß der Cursor 5 auf das Betätigungssymbol 6 weist und nach Klicken der Bedientaste 111 die Unterfunktion 4.1 aufgerufen wird, so das der Cursor 5 erneut automatisch zu einem Betätigunssymbol 4,1 verstellt wird. Gleichzeitig erfolgt die Verstellung des Betätigungselementes 11 an der Eingabeeinheit 1. Die Ist-Positionen des Cursors 5 auf dem Bildschirm 3, die in einem Speicher des Rechners 2 durch interne Speicherberechnung hinterlegt sind, werden beim Soll-Ist-Vergleich mit einer Soll-Position im Programm verglichen. Die Soll-Positionen sind dabei jeweils eine Bedienposition mit den Betätigungssymbolen 6, 6.1. Der Cursor 5, der im Hauptmenue auf einer Bedienposition war, befindet sich beim Aufrufen des Untermenues oftmals nicht mehr in einer Bedienposition, ist jedoch durch die bidirektional wirkende Zuordnung in den selben X-/Y- Koordinaten, wie vorher im Hauptmenue. Das im Programm des Rechners 2 aufgerufene Untermenue besitzt nun neue Bedienpositionen, in die der Cursor 5 durch die im Speicher hinterlegten Koordinaten gebracht wird. Durch den Rechner 2 wird das Betätigungselement 11 über die Halte- bzw. Stelleinrichtung 12 nachgestellt. Soll nicht das erreichte Betätigungssymbol 6, 6.1 sondern ein anderes ausgesucht werden, kann mittels manueller Herausführung des Betätigungselementes 11 oder über eine Zeitschaltung im Programm des Rechners 2 das nächste Betätigungssymbol 6, 6.1 angelaufen werden. Zur Unterstützung der Führung des Cursors 5 befinden sich um die Betätigungssymbole 6, 6.1 Bereiche, in die der Cursor 5 bei Tangierung hineinspringt, so daß eine Annäherung an das jeweilige Betätigungssymbol 6, 6.1 ausreicht, den Cursor 5 exakt einzustellen. Ist eine Bedienposition erreicht, wird der Benutzer über das Erreichen der Bedienposition durch die vom Rechner 2 erzeugten Gegenkräfte in der Eingabeeinheit 1 informiert. Das Betätigungselement 11 kann dann nur noch gegen vom Rechner 2 gesteuerte Gegenkräfte, wenige Millimeter in die vorher freie, nun jedoch blockierte X- und/oder Y-Richtung bewegt werden, wonach das Betätigungselement 11 blockiert wird. Durch Überwindung der Gegenkraft erfolgt eine Meldung von der Eingabeeinheit 1 zum Rechner 2 sowie eine taktile (fühlbare) Rückmeldung über das Betätigungselement 11 an den Benutzer, der dadurch bemerkt, daß er ein Betätigungssymbol 6,6.1 erreicht hat und einen möglichen Stellvorgang/Bedienvorgang auslösen kann. Dazu muß der Benutzer entweder die Bedientaste 111 anklicken (Bedienvorgang) oder gedrückt halten (Stell-/Schaltvorgang).

Die Position des Cursors 5 auf dem Bildschirm 3 ist nicht mehr veranderbar, bis mittels Drucklösung der bis dahin gedrückten Bedientaste 111 das Betätigungselement 11 und der Cursor 5 wieder in X- und Y-Richtung frei beweglich gestaltet sind.
Die bidirektionale Rückmeldung zwischen Betätigungselement 11 und Rechner 2 ermöglicht diesen funktionalen, als Programm ablaufenden Aufbau. Durch die taktile Rückmeldung ist für den Benutzer, auch ohne auf den Bildschirm 3 zu schauen, spürbar und dadurch erkennbar, daß sich das Programm in einer Bedien- oder Stell-/Schaltposition befindet.

Es versteht sich von selbst, daß der Benutzer bereits ausgewählte und ausgeführte Bedienungen rückgängig machen kann. Dies kann er in herkömmlicher Art und Weise durch das Anlaufen an einen Programmpunkt mittels Cursor 5 oder beispielsweise durch ein kurzzeitiges Klicken der Bedientaste 111 des Betätigungselementes 11 der Eingabeeinheit 1 erfolgen, wenn der Cursor 5 in einem Freiraum, d. h. nicht auf einem Betätigungssymbol 6, 6.1 positioniert ist.

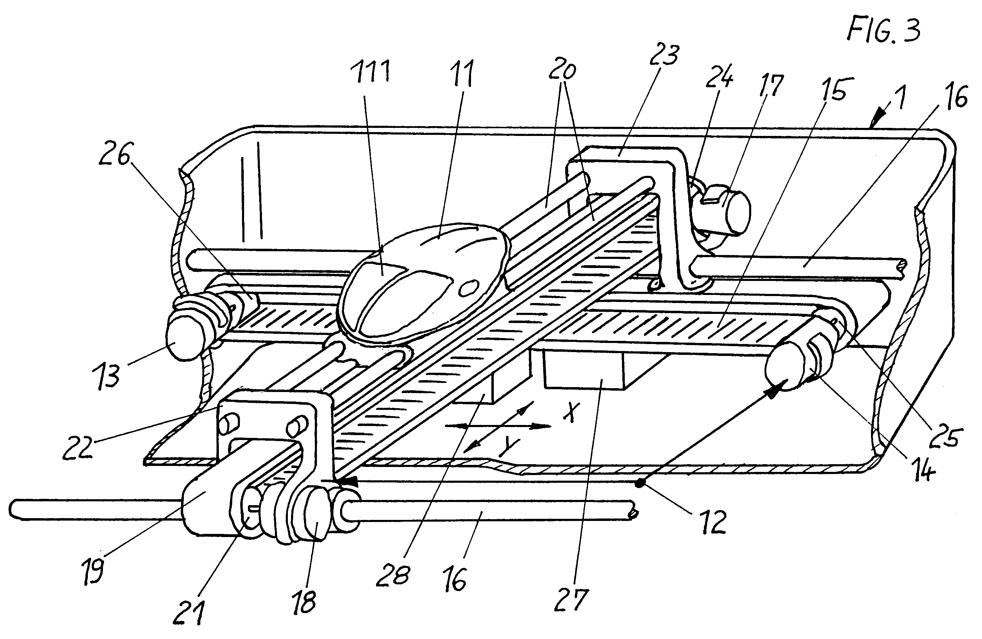

Ein solches Eingabeeinheit 1 ist in Figur 3 dargestellt. Die Eingabeeinheit 1 besteht dabei vorzugsweise aus einem Sensor 13, einem Antriebs- und Bremsmotor 14, einem Zahnriemen 15 als Antriebsmittel sowie einer Führung 16 für die X-Richtung, einem Sensor 17, einem Antriebs- und Bremsmotor 18, einem Zahnriemen 19 als Antriebsmittel und einer Führung 20 für die Y-Richtung. Als elektromotorische Halte- bzw. Stelleinrichtung 12 sind zusammengefaßt diese Elemente hierin bezeichnet. Das Betätigungselement 11 ist in X- und/oder Y-Richtung frei bewegbar. Das Betätigungselement 11 enthält vorzugsweise eine Bedientaste 111 zur Auslösung einer Bedienfunktion 4, 4.1 kann aber auch mehrere Bedientasten 111 aufweisen.

Das Betätigungselement 11 ist in der Führung 20 in Y-Richtung beweglich, d. h. verschiebbar gelagert. Dabei greift das Betätigungselement 11 derart an das Endlos-Antriebsmittel 19 ein, daß bei Verschiebung des Betätigungselements 11 in der Führung 20 das Antriebsmittel 19 mit bewegt wird. Umgekehrt wird bei einer motorischen Verstellung des Antriebsmittels 19 das Betätigungselement 11 mit verstellt. Zur Verstellung des Antriebsmittels 19 wirkt der Antriebs- und Bremsmotor 18 mittels einer Umlaufrolle 21 auf dieses Antriebsmittel 19 ein. Der Antriebs- und Bremsmotor 18 ist vorzugsweise am hinteren Teil der Führung 20 an einer Halterung 22 angebracht. Am vorderen Teil der Führung 20 an einer Halterung 23 befindet sich der Sensor 17 zur Aufnahme der Bewegungsrichtung und des Verstellweges des Antriebsmittels 19 in Y-Richtung, wobei der Sensor 17 gleichfalls vorzugsweise an einer Umlaufrolle 24 befestigt ist. Die Führung 20 ist mittels der Halterungen 22, 23 auf der Führung 16 verschieblich gelagert. Die Halterung 23 ist mit dem Endlos-Antriebsmittel 15 verbunden, so daß dessen Bewegung in X-Richtung die Führung 20 senkrecht zur Führung 16 auf dieser bewegt, wodurch das Betätigungselement 11 in X-Richtung bewegt wird. Der Antriebs- und Bremsmotor 14, vorzugsweise an einer Umlaufrolle 25 befestigt, bewirkt neben dem Betätigungselement 11 eine Verstellung des Antriebsmittels 15. Die motorische Verstellung des Antriebsmittels 15 bewirkt gleichfalls eine Verstellung des Betätigungselementes 11. Der Sensor 13, der an einer Umlaufrolle 26 des Antriebsmittels 15 befestigt ist, dient zur Aufnahme der Bewegungsrichtung und zur Messung des Verstellweges des Antriebsmittels 15 in X-Richtung. Die Führungen 16, 20 wirken miteinander und schaffen somit die Voraussetzung, daß das Betätigungselement 11 auf der begrenzten Fläche in der Eingabeeinheit 1 in X- und Y-Richtung geführt wird.

Wird das Betätigungselement 11 in X- und/oder Y-Richtung bewegt, so nehmen die Sensoren 13, 17 diese Information aufund geben sie an den Rechner 2 und dadurch an den Cursor 5 weiter. Mittels Antriebsmitteln 15, 19 wird erreicht, daß die Verstellung in meßbaren Schritten erfolgt. So kann durch die Antriebsmittel 15, 19 das bereits erwähnte Referenzmuster zwischen dem Betätigungselement 11 und dem Cursor 5 eindeutig nachgebildet werden, indem beispielsweise ein Zahn der Antriebsmittel 15, 19 die Information von 1mm Verstellung in X- oder Y-Richtung beinhaltet.

Um eine unkontrollierte Bewegung des Betätigungselements 11 zu vermeiden, läuft dieses in Führungen 16, 20. Zur Unterstützung der Bewegung des Betätigungselements 11 dienen die Antriebs- und Bremsmotore 14, 18, sowohl beim Anfahren in eine bestimmte Position durch das Programm des Rechners 2 als auch bei der Rückkehr in die definierte Ausgangsposition. An dem untenliegenden Teil der Antriebsmittel 15, 19 kann ein Ausgleichsgewicht 27, 28 angebracht sein. Die Ausgleichsgewichte 27, 28 haben eine Masse, die der jeweils vom oberen Teil der Antriebsmittel 15, 19 angetriebenen Masse entspricht. Dadurch wird ein selbständiges, z. B. durch Beschleunigung des Fahrzeuges wirkendes Verstellen des Betätigungselements 11 vermieden. Dabei verläuft das mit der geringeren Masse belastete Antriebsmittel 19 vorzugsweise in Richtung der Fahrzeuglängsachse, so daß hier bei einer entsprechenden Selbsthemmung im System unter Umständen kein Ausgleichsgewicht erforderlich ist.

Ist die gewünschte Position des Cursors 5 erreicht, schalten die Antriebs- und Bremsmotore 14, 18 auf Bremsen, wodurch im letzten Abschnitt der bewegungsfreien Richtung die zur taktilen Rückmeldung notwendigen Gegenkräfte erzeugt werden. Das Betätigungselement 11 wird dann bei beispielsweiser gedrückter Bedientaste 111 nur noch in die frei bewegbare Richtung bis zu einer Stopp-Position, die durch die gesteuerten Gegenkräfte geschaffen wird, bewegt und nach Drucklösung der Bedientaste 111 und Klicken selbiger selbständig durch die Motoren 14, 18 wieder an der Ausgangsposition an der Eingabeeinheit 1 zurückgeführt.

Die taktile Rückmeldung kann auch dadurch bewirkt werden, daß nach einem vorgegebenen Verstellweg die Motore 14, 18 stoppen und der Benutzer den zur jeweiligen Richtung gehörenden Motor 14, 18 durch manuelle Krafteinwirkung am Betätigungselement 11 überdrückt. Hierbei kann ein der manuellen Verschiebung entgegenwirkendes Moment im jeweiligen Motor 14, 18 erzeugt werden. Dazu erfassen die Sensoren 13, 17 die Verschiebungs- und damit Wegänderungen in X- und/oder Y- Richtung, geben diese Änderungen an den Rechner 2 weiter, der in Abhängigkeit des Programmes den jeweiligen Motor 14, 18 entgegen der Stell- bzw. Verschiebungsrichtung bestromt. Bei der Entgegenwirkung wird eine spürbare Gegenkraft beim Ausführen eines Stell- oder Schaltvorgangs am Betätigungselement 11 erzeugt. Der Benutzer empfindet den STOPP des Motors 14, 18 subjektiv als Anschlag und leitet daraus ab, daß sich das Betätigungselement 11 in der gewünschten Bedienposition befindet. Nach Ausführung des Schalt- bzw. Bedienvorganges bewegt der bestromte Motor 14, 18 das Betätigungselement 11 in die Ausgangsposition zurück und wird durch den Rechner 2 abgeschaltet.

Im Rahmen der Ansprüche sind Ausgestaltungen möglich. So kann die Bedienoberfläche des Bildschirmes 3 mit herkömmlichen Bediensystemen kombiniert werden, so daß Direktanordnung von Anzeigen und Betätigungen sowie Wahlzuordnungen mittels Programm möglich sind. Über nicht dargestellte Schalter und den Cursor 5 sind die Funktionen 4 am Bildschirm 3 vorwählbar. Dies bietet sich für alle Grundfunktionen, wie Scheibenwischer, Licht usw. an.

Auch erlaubt die Nutzung der Bedienoberfläche dem Fahrzeugführer (Benutzer) im Rahmen des vom Fahrzeughersteller Erlaubten, die Symbolik wie bei herkömmlichen, beispielsweise Window-Benutzungen individuell zu gestalten und anzuordnen.
Mittels 'Memory', d.h. speichern von einmal ausgeführten individuellen Verstellungen und Einstellungen im Fahrzeug, beispielsweise der Sitzposition, erhöht sich die Bedienbarkeit des Bediensystemes 10. Diese 'Memories' können durch den Benutzer gleichfalls hinter Betätigungssymbole 6, 6.1 individuell gelegt werden.
Ebenfalls variabel läßt sich durch eine vorgegebene Bedienungsoftware die Auflösung des Bildschirmes 3 erstellen. Dies kann neben den Betätigunssymbolen 6 für das Hauptmenue und Betätigungssymbolen 6.1 für die Untermenues über herkömmliche Rolleisten erfolgen oder durch Aufteilung in Bildschirmquadranten. Dabei beinhalten die vier Quadranten jeweils vier Funktionen 4. Nach Betätigung des Betätigungselements 11 und dem Anklicken des Cursors 5 in einem Quadranten durch Drücken der Bedientaste 111 teilt sich das Untermenue wieder in vier Quadranten auf, so daß vier Unterfunktionen 4.1 jeweils in einem Quadranten oder auf dem gesamten Bildschirm 3 angeordnet sind. Die in der Programmreihe liegende Unterfunktion 4.1 könnte auch den gesamten Bildschirm 3 einnehmen, so daß mit Betätigen der Bedientaste 111 der Stell- oder Schaltvorgang ausgeführt wird. Danach erfolgt durch beispielsweise 2-maliges Klicken der Bedientaste 111 oder ein Programm die Einstellung der ursprünglichen auf dem Bildschirm 3 angeordneten Betätigungssymbole 6 des Hauptmenues. Der Cursor 5 wird dabei durch den Rechner 2 und das Betätigungselement 11 wird durch den Rechner 2 und die Halte- bzw. Stelleinrichtung 12 in die Ausgangsposition zurückgestellt.

Eine weitere Ausgestaltung der Eingabeeinheit 1 besteht darin, diese mit zusätzlichen, der Übersichtlichkeit halber nicht mehr dargestellten Sensoren auszustatten. Über diese Sensoren wird der Rechner 2 informiert, ob die Betätigung durch den Fahrer oder einen Beifahrer erfolgt, beispielsweise durch Kontaktzählung, bedingt durch die unterschiedliche Anordnung von Daumen und Finger einer rechten und einer linken Hand. Während die Eingabeeinheit 1, die sich vorzugsweise mittig zwischen Fahrer und Beifahrer befindet, durch den Fahrer wie vorgenannt bedient wird, sind beispielsweise bei Bedienung durch den Beifahrer nur ganz spezielle, den Beifahrer betreffende Funktionen 4 und Unterfunktionen 4.1 aufrufbar. Somit kann der Beifahrer diese für sich selbst einstellen.

Fahrzeuge im Sinne dieser Anmeldung sind Land-, Luft- und Wasserfahrzeuge jeder Art.

## Patentansprüche

1. Verfahren zur Bedienung eines Bildschirmsystems in Fahrzeugen, dadurch gekennzeichnet, daß eine Eingabeeinheit (1) mit einem Rechner (2) bidirektional wirkend verschaltet ist und der Rechner (2) eine Information (8) auf der Oberfläche eines Bildschirmes (3) steuert.

2. Verfahren nach Anspruch 1, dadurch gekennzeichnet, daß die Oberfläche des Bildschirmes (3) eine grafischen Benutzeroberfläche ist und ein Cursor (5) auf der grafischen Benutzeroberfläche des Bildschirmes (3) gesteuert wird.

3. Verfahren nach Anspruch 1 oder 2, dadurch gekennzeichnet, daß die bidirektionale Zuordnung zwischen einem in zwei Ebenen beweglichen Betätigungselement (11) der Eingabeeinheit (1) und dem Cursor (5) des Bildschirmes (3) über ein im Rechner (2) abgelegtes Referenzmuster der zugehörigen Koordinaten erfolgt.

4. Verfahren nach einem der Ansprüche 1 bis 3, dadurch gekennzeichnet, daß mittels der Eingabeeinheit (1) und dem entsprechende Programme enthaltenen Rechner (2) in Verbindung mit für den jeweiligen Anwendungsfall geeignete Aktoren (7) im Fahrzeug ausgewählte Funktionen (4) wie Schaltvorgange oder Steuervorgänge durchgeführt werden.

5. Verfahren nach einem oder mehreren der vorgenannten Ansprüche 1 bis 4, dadurch gekennzeichnet, daß der Rechner (2) Programmbestandteile aufweist, die über eine elektromotorische Halte- bzw. Stelleinrichtung (12) auf das Betätigungselement (11) der Eingabeeinheit (1) einwirken.

6. Verfahren nach einem oder mehreren der vorgenannten Ansprüche 1 bis 5, dadurch gekennzeichnet, daß der Rechner (2) das Betätigungselement (11) der Eingabeeinheit (1) in X- und/oder Y-Richtung freischaltet und/oder blockiert.

7. Verfahren nach Anspruch 6, dadurch gekennzeichnet, daß die Freischaltung und/oder Blockierung durch in der Eingabeeinheit (1) angeordnete elektromotorische Halte- bzw. Stelleinrichtungen (12) bewirkt wird.

8. Verfahren nach einem oder mehreren der vorgenannten Ansprüche 1 bis 7, dadurch gekennzeichnet, daß über Sensoren (13, 17) die Ist-Position des Betätigungselements (11) in X- und Y-Richtung ermittelt und an den Rechner (2) geleitet wird.

9. Verfahren nach einem oder mehreren der vorgannten Ansprüche 1 bis 8, dadurch gekennzeichnet, daß durch einen Soll-Ist-Vergleich der Positionen des Cursors (5) und des Betätigungselementes (11) der Rechner (2) den Cursor (5) auf dem Bildschirm (3) und über die elektromotorische Verstelleinrichtung (12) das Betätigungselement (11) in der Eingebeeinheit (1) automatisch positioniert.

10. Verfahren nach einem oder mehreren der vorgannten Ansprüche 1 bis 9, dadurch gekennzeichnet, daß zur Unterstützung der Führung des Cursors (5) sich um das Betätigungssymbol (6, 6.1) ein Bereich befindet, in den der Cursor (5) bei Tangierung des Bereiches hineinspringt.

11. Verfahren nach einem oder mehreren der vorgannten Ansprüche 1 bis 10, dadurch gekennzeichnet, daß manuell oder durch eine im Programm des Rechners (2) vorgegebenen Zeitschaltung automatisch bei Nichtbetätigung der Bedientaste (111) das nächste Betätigungssymbol (6, 6.1) angelaufen wird.

12. Verfahren nach einem oder mehreren der vorgannten Ansprüche 1 bis 11, dadurch gekennzeichnet, daß das Betätigungselement (11) bei gedrückter Bedientaste (111) in die ausgewählte(n) und freigeschaltete(n) Verschiebungsrichtung(en) manuell geführt wird und dabei eine Stell- oder Schaltfunktion über den Rechner (2) ausführt.

13. Verfahren nach einem oder mehreren der vorgannten Ansprüche 1 bis 12, dadurch gekennzeichnet, daß innerhalb eines Programms der ausgewählten Funktion (4) nach Initiierung des Übergangs zu einer Unterfunktion (4.1) oder nach Beendigung der Hauptfunktion (4) durch den Benutzer mittels manueller Betätigung des Betätigungselements (11) in eine ausgewählte und freigeschaltete Verschieberichtung der Rechner (2) unter entsprechender Ansteuerung der elektromotorischen Halte- bzw. Stelleinrichtung (12) das Betätigungselement (11) und damit auch den Cursor (5) in die nächste im Programm vorgesehene Schaltposition führt.

14. Verfahren nach einem oder mehreren der vorgannten Ansprüche 1 bis 13, dadurch gekennzeichnet, daß der Rechner (2) bei einer in Stopp-Position befindlichen Stellung des Betätigungselements (11) ein 'Programm-Start oder -Stopp-Signal' für die elektromotorische Halte- bzw. Stelleinrichtung (12) erhält, wenn das Betätigungselement (11) manuell aus dieser Position bewegt wird oder eine an diesem Betätigungselement (11) befindliche Bedientaste (111) betätigt wird.

15. Verfahren nach einem oder mehreren der vorgenannten Ansprüche 1 bis 14, dadurch gekennzeichnet, daß der Rechner (2) bei einer in Stopp-Position befindlichen Stellung des Betätigungselements (11) durch entsprechende Ansteuerung der Antriebs- und Bremsmotore (14, 18) eine für den Benutzer spürbare (taktile) Gegenkraft beim Stell- oder Schaltvorgang erzeugt.

16. Bildschirmsystems, vorzugsweise in Fahrzeugen, bestehend aus einer Eingabeeinheit, einem Rechner und einem Bildschirm, dadurch gekennzeichnet, daß eine Eingabeeinheit (1), räumlich getrennt, jedoch schaltungstechnisch mit dem Rechner (5) und dem Bildschirm (2) verbunden, vorzugsweise im Bereich der Mittelkonsole des Fahrzeuges angeordnet ist.

17. Eingabeeinheit zur Bedienung eines Bildschirmsystemes vorzugsweise in Fahrzeugen, dadurch gekennzeichnet, daß die Eingabeeinheit (1) ein Betätigungselement (11) aufweist, das auf einer begrenzten Fläche in zwei Ebenen (X- und Y-Richtung) frei beweglich angeordnet ist, wobei zur Erfassung einer Position des Betätigungselements (11) Sensoren (13, 17) angeordnet sind, die mit dem Rechner (2) elektrisch in Verbindung stehen.

18. Eingabeeinheit nach Anspruch 17, dadurch gekennzeichnet, daß das Betätigungselement (11) mindestens eine Bedientaste (111) zur Schaltung von Funktionen (4) und Unterfunktionen (4.1) oder für den Übergang in nachfolgende Programme/Programmschritte aufweist.

19. Eingabeeinheit nach einem oder mehreren der vorgenannten Ansprüche 17 bis 18, dadurch gekennzeichnet, daß das Betätigungselement (11) mit dem Rechner (2) bidirektional wirkend verschaltet ist.

20. Eingabeeinheit nach einem oder mehreren der vorgenannten Ansprüche 17 bis 19, dadurch gekennzeichnet, daß das Betätigungselement (11) dem Cursor (5) bidirektional wirkend zugeordnet ist.

21. Eingabeeinheit nach einem oder mehreren der vorgenannten Ansprüche 17 bis 20, dadurch gekennzeichnet, daß das Betätigungselement (11) zusätzliche Sensoren zur Erkennung von Fahrer oder Beifahrer aufweist.

22. Eingabeeinheit nach einem oder mehreren der vorgenannten Ansprüche 17 bis 21, dadurch gekennzeichnet, daß das Betätigungselement (11) in Y-Richtung verschieblich auf einer Führung (20) angeordnet und mit einem in diese Richtung verlaufenden Antriebsmittel (19) verbunden ist, das von einem Antriebs- und Bremsmotor (18) antreibbar und dessen Stellweg und damit die Position des Betätigungselements (11) in Y-Richtung von einem Sensor (17) erfaßt wird, wobei diese Bauteile mittels zweier Halterungen (22, 23) eine Baueinheit bilden, die in X-Richtung senkrecht zur Führung (20) mittels einer weiteren Führung (16), auf der die Halterung (22, 23) gelagert sind, verschieblich und mittels einem Antriebs- und Bremsmotor (14) und einem weiteren Antriebsmittel (5) und unter Erfassung des Verstellweges mittels eines Sensors (13) verstellbar angeordnet ist, wobei das in X-Richtung verlaufende Antriebsmittel (15) mit der Halterung (23) verbunden ist.

23. Eingabeeinheit nach einem oder mehreren der vorgenannten Ansprüche 17 bis 22, dadurch gekennzeichnet, daß mindestens eines der Antriebsmittel (15) mit einem Ausgleichgewicht (27) versehen ist.

24. Eingabeeinheit nach einem oder mehreren der vorgenannten Ansprüche 17 bis 23, dadurch gekennzeichnet, daß die Antriebsmittel (15, 19) Endlos-Antriebsmittel (15, 19), beispielsweise Zahnriemen, sind.

25. Eingabeeinheit nach einem oder mehreren der vorgenannten Ansprüche 17 bis 24, dadurch gekennzeichnet, daß das mit der geringeren Masse belastete Antriebsmittel in Richtung der Fahrzeuglängsachse verläuft.
